(19) **Europäisches Patentamt**
**European Patent Office**
**Office européen des brevets**

(11) **EP 1 043 716 B1**

(12) **EUROPEAN PATENT SPECIFICATION**

(45) Date of publication and mention
of the grant of the patent:
**24.03.2010 Bulletin 2010/12**

(51) Int Cl.:
**G11B 7/09** *(2006.01)*      **G11B 7/135** *(2006.01)*
**G11B 7/22** *(2006.01)*      *G02B 26/08* *(2006.01)*

(21) Application number: **00303004.6**

(22) Date of filing: **10.04.2000**

(54) **A micromirror device and an optical pick-up using the same**

Eine Miniaturspiegeleinheit und ein optischer Aufnahmekopf für diesen

Un dispositif à micromiroir et une tête optique l'utilisant

(84) Designated Contracting States:
**DE FR GB IT**

(30) Priority: **08.04.1999 KR 9912368**

(43) Date of publication of application:
**11.10.2000 Bulletin 2000/41**

(73) Proprietor: **LG Electronics, Inc.**
**Seoul (KR)**

(72) Inventor: **Yee, Young Joo**
**Ilsan-gu,**
**Koyang-shi,**
**Kyonggi-do (KR)**

(74) Representative: **McLeish, Nicholas Alistair**
**Maxwell et al**
**Boult Wade Tennant**
**Verulam Gardens**
**70 Gray's Inn Road**
**London WC1X 8BT (GB)**

(56) References cited:
**DE-A- 3 935 891      US-A- 5 136 425**

• **Patent Abstracts of Japan, vol. 97, no. 12, 25 December 1997 & JP 09 204696 A (HITACHI MAXELL LTD.) 05 August 1997.**

**Description**

BACKGROUND OF THE INVENTION

Field of the Invention

The present invention relates to optical pick-up devices. The invention also relates to micromirror devices, for example for use in tracking and to enhance the recording density of an optical data storage medium, and to optical pick-up devices using such micromirror devices.

Background of the Related Art

In general, development of the multimedia technology is made possible by using development of a media which can store a large amount of information as a background technology. Currently, in a magnetic hard disk field, there are high density supplementary memory of a 10GB class and over under development employing GMR(Great Magnetic Reluctance), and in an optical disk field, there are, starting from audio dedicated CD(Compact Disk), optical disk for use as supplementary memory of a computer, and DVD(Digital Versatile Disc) having a memory capacity six to seven times greater than conventional CD, developed up to now. In the meantime, the optical recording media is known as a recording technology suitable for coming up with trend of high density because it has the higher recording density than its of magnetic recording media. In order to enhance an data storage density, both pitches between data tracks of a recording data, and distances of data recording marks should be reduced. However, under this circumstance, if the distance between data marks are reduced to a size in range of a wavelength of light used in a pick-up, the data is no more distinguishable due to a optical diffraction limitation. That is, a minimum size of a data mark and a distance 'D' between the marks which are detectable by a related art optical pick-up can be expressed as follows.

$$D = \frac{\lambda}{2NA}$$

Where, λ denotes a wavelength of the light source, NA denotes a numerical aperture of an optical system. As a general numerical aperture of an optical system is in a range of 0.5 ~ 0.7, eventually, a minimum size of a data for the optical recording device used presently can not be reduced below a wavelength of light used presently, which limits a recording density. Therefore, in order to overcome such a problem, an optical near field technology is introduced. However, only with such a method for overcoming a diffraction limit in an optical technology, recording/reproduction of a high density information is not possible, and a method for making a precise control of a pick-up position below a reduced pitch is required for recording/detection of the data. Presently, though an optical pick-up position control by using a voice coil motor and the like is used in an optical recording device for CD or DVD, tracking of a data pitch of a high density optical recording medium with a density of a few tens of giga bits per a square inch is difficult.

Document DE 3935891 discloses an arrangement for adjusting a mirror perpendicular to its mirror surface for altering the beam path length in a laser gyroscope, the force for adjusting the mirror being applied by a piezoelectric device.

Document US 5,555,539 discloses a multibeam split-type optical head having optics including a stationary section and a movable section where a plurality of light beams generated from a plurality of light sources in the stationary section are parallel to shifting direction of the moveable section until entering the moveable section.

Document US, 5,532,997 discloses an optical tracking system comprising a beam source which generates a light beam that travels through a splitter/filter and proximate to a DMD array such that a single element within the DMD array deflects the light beam towards a selected track.

Document US 5,428,588 discloses an optical head having a fixed portion including a laser optical source for emitting a light and a signal detecting system for detecting an error signal, and a moveable portion having a beam splitter with a prism boundary face and an objective positioned opposing a surface of the optical data recording medium.

SUMMARY OF THE INVENTION

There is provided a micromachined micromirror device as set out in claim 1, and an optical pick-up as set out in claim 8.

The present invention addresses one or more of the problems due to limitations and disadvantages of the related art.

It would be desirable to provide a micromirror device, and an optical pick-up using the same, which can enhance precision of data pitch tracking.

According to a first aspect the present invention provides a micromirror device comprising a mirror driver on a substrate, and a mirror part for making a parallel movement in up and down direction by the mirror driver.

The mirror driver includes a piezoelectric actuator for being displaced in response to an external control signal, a connector connected to the mirror part and the piezoelectric actuator for transmitting a displacement of the piezoelectric actuator to the mirror part, to displace the mirror part, and a controller for controlling the displacement of the piezoelectric actuator.

Preferably, the piezoelectric actuator includes a spacer formed to a thickness on a periphery of the substrate, cantilevers spaced from a surface of the substrate, and a piezoelectric material formed in, or on each of the cantilevers.

Preferably, the cantilevers are spaced from, and are symmetric to the mirror part.

According to a second aspect of the present invention, there is provided an optical pick-up using a micromirror device comprising a light source module for emitting a light, a converging part for converging the light from the light source module onto a surface of an optical recording medium, an optical detector for converting the light reflected by the light recording medium into an electric signal, an optical splitter disposed between the light source module and the converging part for directing the light emitted from the light source module to the converging part, and the light reflected at the optical recording medium and passed through the converging part to the optical detector, and the micromirror device disposed between the converging part and the optical splitter for reflecting an incident light and making a fine adjustment of a light path of the reflected light.

It is to be understood that both the foregoing general description and the following detailed description are exemplary and explanatory and are intended to provide further explanation of the invention as claimed.

BRIEF DESCRIPTION OF THE DRAWINGS

Embodiments of the invention will now be described, by way of example only, and with reference to the accompanying drawings, of which:

    FIG. 1 illustrates an optical pick-up of a micromirror in accordance with a preferred embodiment of the present invention;
    FIGS. 2 and 3 illustrate reflection of a laser beam and change of light axis by a micromirror in accordance with a preferred embodiment of the present invention;
    FIGS. 4A, 4B, and 4C illustrate a perspective view, plan view, and section across line I-I in FIGS. 4A and 4B showing a structure of a micro-mirror in accordance with a preferred embodiment of the present invention; and,
    FIG. 4D illustrates a section of a micromirror in accordance with another embodiment of the present invention;
    FIGS. 5A and 5B illustrate an operating principle of a piezoelectric-actuator in a micromirror; and,
    FIG. 6 illustrates a graph showing driving characteristics of the micromirror.

DETAILED DESCRIPTION OF THE PREFERRED EMBODIMENT

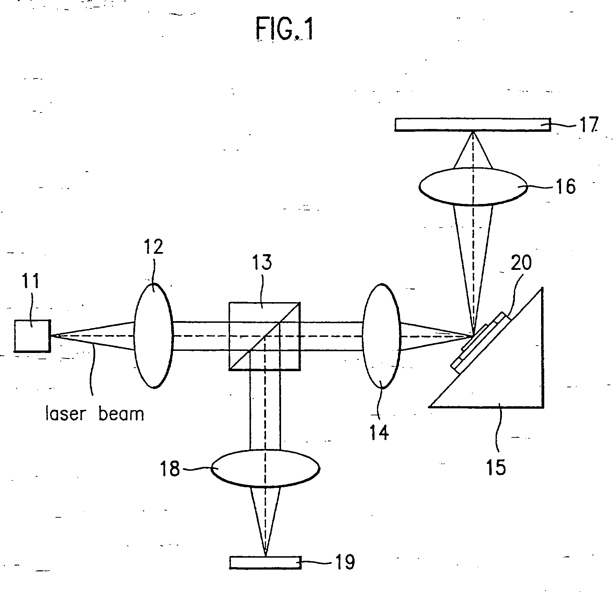

Reference will now be made in detail to the preferred embodiments of the present invention, examples of which are illustrated in the accompanying drawings. Precise tracking of a data pitch in a high density optical data storage device may be carried out by making a fine position change of a recording/reproducing laser beam using a micromachining technology and a micromirror fabricated in a silicon batch fabrication process. Particularly, parallel driving of micromirror by using piezoelectric actuators, a position of a beam can be controlled linearer than current tilting type mirror driving. FIG. 1 illustrates an optical pick-up of a micromirror in accordance with a preferred embodiment of the present invention.

Referring to FIG. 1, the optical pick-up of a micromirror in accordance with a preferred embodiment of the present invention includes a laser light source 11, first to fourth optical lenses 12, 14, 16 and 18, a beam splitter 13, a parallel driving micromirrors 20 on a 45° slope ofa sub-mount 15, and a photoelectric converter 19.

The operation of the aforementioned optical pick-up of a micromirror in accordance with a preferred embodiment of the present invention will be explained.

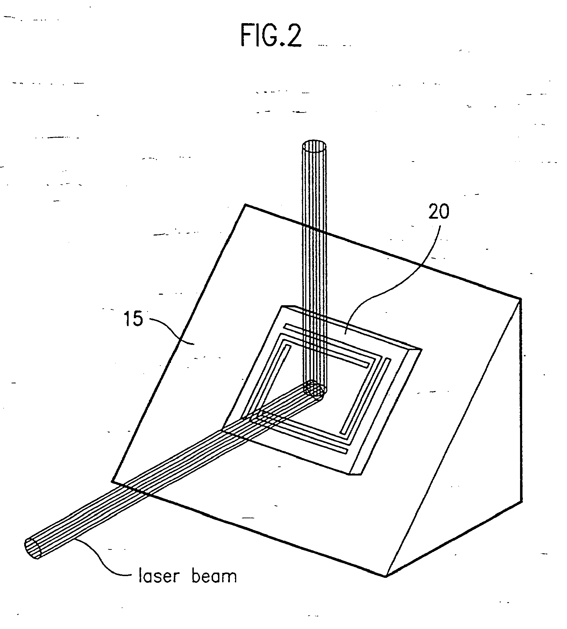

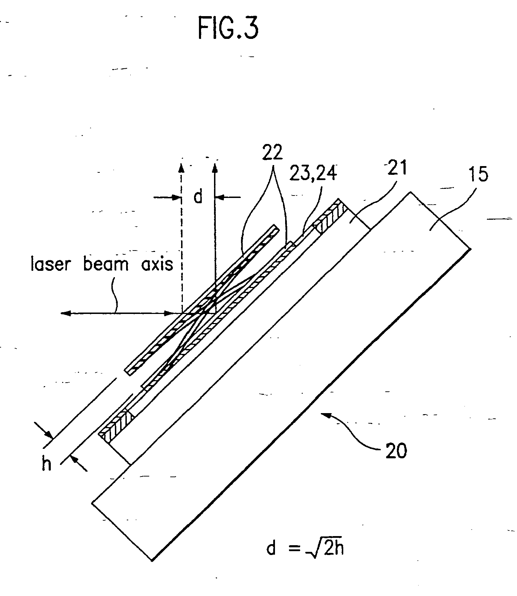

A laser beam emitted from the laser light source 11 is incident to a first optical lens 12, and altered into a parallel beam, and incident to the second optical lens 14 after the beam passes through the beam splitter 13. The laser beam is then focused onto, and reflected at a parallel driven actuated micromirror 20, and incident to the third optical lens 16, and focused onto a data mark position of an optical disk 17 a data will be recorded/reproduced thereon/therefrom. he actuated micromirror 20 is on the sub-mount 15 at 45 ° to a direction of laser beam procession, and makes a fine change of a path of the laser beam, for adjusting a position of the laser beam focused onto the optical disk 17. That is, by controlling a position of the laser beam more precisely than the track pitch, the track pitch of a high density marks can be found. Then, the laser beam focused onto the data mark on the optical disk 17 is reflected at the data mark, and reverses a beam path, to pass through the third optical lens 16, reflected at the actuated micromirror 20, passes through the second optical lens 14 and the beam splitter 13, and focused onto the photoelectric converter 19(a photodiode is applied in the present invention as one example) by the fourth optical lens 18, for determining the data. The photoelectric converter 19 converts the laser beam incident from the fourth optical lens 18 into an electric signal, which contains information recorded on the optical disk 17. Thus, the present invention can enhance a precision of a data pitch tracking on the optical disk by using the parallel driven actuated micromirror 20 on the 45 ° sub-mount 15, a principle of driving which will be explained. FIGS. 2 and 3 illustrate reflection of a laser beam and change of light axis by a micromirror in accordance with a preferred embodiment of the present invention, wherefrom it can be known that precise control of the parallel driving micromirror permits a precise control of a laser beam reflection path. When the cantilever 23, a driving part, and a piezoelectric material 24 are connected to the micromirror realized on the substrate 21 released by micromachining, the micromirror 22 makes fine movements in up and down direction according to a displacement of the driving part. That is, the micromirror 22 makes a parallel displacement 'h' in proportion to voltage/current applied to an external controller, that causes a displacement 'd' of the axis of the incident laser beam, wherein 'd' and 'h' have the following relation according to 45° angle between the laser beam and the sub-mount 15.

$$\dot{d} = \sqrt{2h}$$

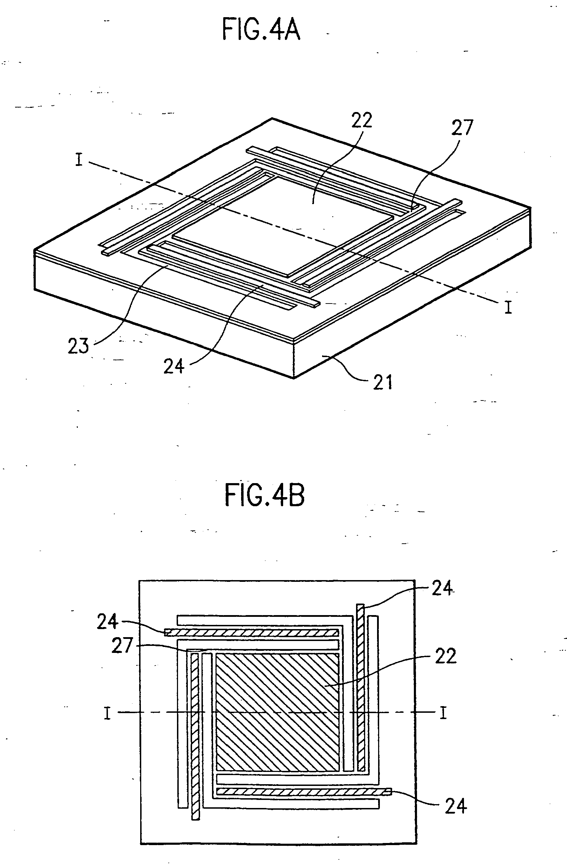

A structure of the micro-mirror will be explained in more detail, with reference to FIGS. 4A ~ 4C.

Referring to FIG. 4A ~ 4C, the micro-mirror in accordance with a preferred embodiment of the present invention includes a driver for driving a mirror, and a mirror part for being moved by the mirror driver in up and down direction. The mirror driver includes a piezoelectric actuator having a cantilever 23 and a piezoelectric material 24, a connecting hinge 27 for connecting the piezoelectric actuator and the mirror part, and a controller (not shown) for controlling a displacement of the piezoelectric actuator, and the mirror part includes a mirror 22 and a supporting plate 26 under the mirror for supporting the mirror 22. The cantilever 23 in the piezoelectric actuator is formed overhung from a spacer 25 formed on a periphery of the substrate 21 with a space between a surface of the substrate 21 and the cantilever 23. The cantilevers 23 are symmetric to the mirror part and connected to the supporting plate 26 in the mirror part by a hinge 27. The above symmetric cantilevers are exemplary, and there can be many variations of the symmetric cantilevers. And, the supporting plate 26 in the mirror part is spaced from the surface of the substrate 21 the same as the cantilever 23, and a micro actuator structure of the piezoelectric material 24 is formed on or in the cantilever 23.

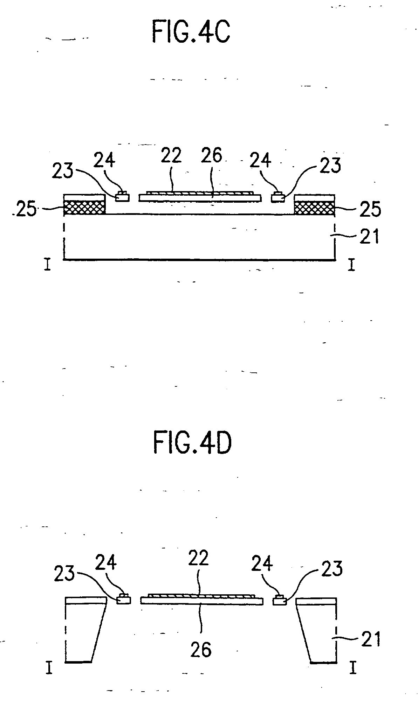

Other than this structure, the micro actuator structure may be formed as shown in FIG. 4D. FIG. 4D illustrates a section of a micromirror in accordance with another embodiment of the present invention, wherein a back surface of the substrate 21 is etched, to release the cantilevers 23 and the supporting plate 26 from the substrate 21 by using, not the spacer 25 as shown in FIG. 4C, but bulk micromachining.

The operation of the aforementioned micromirror will be explained.

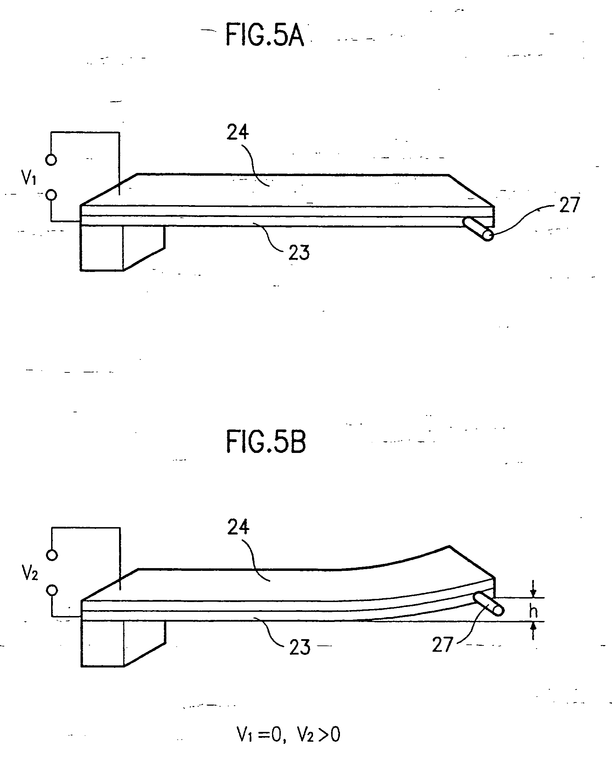

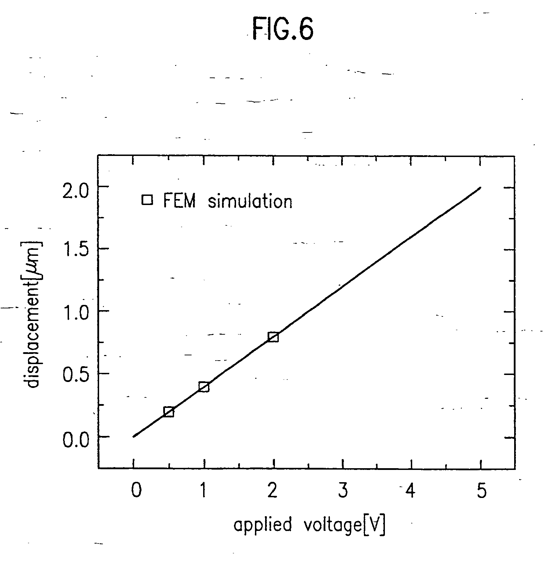

Referring to FIG. 5A, when there is no voltage ($V_1 = 0$) applied to electrodes on the piezoelectric material 24 and the cantilever 23, there is no change in the piezoelectric material 24 and the cantilever 23 as well as the hinge 27 connected to the cantilever 23. However, upon application of a driving voltage $V_2$ to the electrodes, a strain in the piezoelectric material 24 caused by the driving voltage $V_2$ changes a shape of the cantilever 23, to cause a displacement of the cantilever 23 by 'h' in a vertical direction, together with the connection hinge 27 connected thereto. Since the connection hinge 27 is connected to the mirror supporting plate 26 in the mirror part, the displacement 'h' of the cantilever is transmitted to the mirror supporting plate 26. According to this, the mirror supporting plate 26 and the mirror 22 thereon make a fine movement in a direction vertical to a mirror surface, thereby permitting a precise adjustment of a path of the incident laser beam. According to a prediction of behaviour of the micromirror!- of the present invention by finite element method simulation, it can be known that a displacement 'h' of the micromirror is linearly proportional to the applied voltage $V_2$, comparatively. That is, as shown in FIG. 6, a calculation of a light axis variation caused by a piezoelectric actuator of approx. $300\mu m$ length formed of approx. $2\mu m$ thick silicon cantilever having approx. $0.4\mu m$ thick PZT piezoelectric material deposited thereon is as follows. When the driving voltage is increased by an approx. 0.1V increment, the micromirror moves by approx. 395Å in parallel, and the light path varies by approx. 559Å, √2 times of the 395Å, which is enough to distinguish a pitch between data mark tracks of a high density optical recording medium.

As has been explained, the micromirror device for use in tracking, and the optical pick-up using the same can enhance, not only a precision of position adjustment between data track pitches of an optical data storage significantly, but also a tracking speed, and a high density optical recording medium over a few tens of giga bits per square inches can be realized when the micromirror technology of the present invention and the technology for increasing a density of an optical recording medium are combined.

It will be apparent to those skilled in the art that various modifications and variations can be made in the micromirror device for use in tracking, and the optical pick-up using the same as described herein without departing from the scope of the invention as defined by the following claims.

**Claims**

1. A micromachined micromirror device comprising:

    a mirror driver on a substrate (21); and
    a mirror part (22) for making a parallel movement in a direction perpendicular to the surface of the mirror part (22) by the mirror driver;
    wherein the mirror driver includes;
    a piezoelectric actuator (23, 24) for being displaced in response to an external control signal;
    a connector (27) connected to the mirror part (22) and the piezoelectric actuator (23, 24) for transmitting a displacement of the piezoelectric actuator (23, 24) to the mirror part (22), to displace the mirror part (22); and
    a controller for controlling the displacement of the piezoelectric actuator (23, 24).

2. A micromirror device as claimed in claim 1, wherein the piezoelectric actuator (23, 24) includes;
a spacer (25) formed to a thickness on a periphery of the substrate,
cantilevers (23) spaced from a surface of the substrate, and
a piezoelectric material (24) formed in, or on each of the cantilevers (23).

3. A micromirror device as claimed in claim 2, wherein the cantilevers (23) are spaced from, and are symmetric to the mirror part (22).

4. A micromirror device as claimed in any preceding claim, wherein the mirror part (22) includes;
a mirror for reflecting an incident light, and
a support (26) formed under the mirror for supporting the mirror.

5. A micromirror device as claimed in any preceding claim, wherein the mirror part (22) is spaced from the substrate (21).

6. A micromirror device as claimed in any preceding claim, wherein the substrate (21) has a through hole in a position thereof.

7. A micromirror device as claimed in claim 6, wherein the through hole is positioned in a bottom surface of the mirror part (22).

8. An optical pick-up using a micromirror device as defined by any of claims 1 to 7, comprising:

a light source module (11) for emitting a light;
a converging part (12) for converging the light from the light source module (11) onto a surface of an optical recording medium (17);
an optical detector (19) for converting the light reflected by the optical recording medium (17) into an electric signal;
an optical splitter (13) disposed between the light source module (11) and the converging part for directing the light emitted from the light source module to the converging part, and the light reflected at the optical recording medium (17) and passed through the converging part to the optical detector (19), and
the micromirror device (20) disposed between the converging part and the optical splitter (13) for reflecting an incident light and making a fine adjustment of a light path of the reflected light.

9. An optical pick-up as claimed in claim 8, wherein the micromirror device is disposed on a 45° slope surface of a sub-mount (15).

10. An optical data storage device comprising the micromirror device of any of claims 1 to 7.

11. An optical data storage device comprising the optical pick-up of either of claims 8 or 9.

**Patentansprüche**

1. Mikrobearbeitete Miniaturspiegelvorrichtung, umfassend:

- ein Spiegelantriebsmittel auf einem Substrat (21), und
- ein Spiegelteil (22), um eine Parallelbewegung in eine zu der Oberfläche des Spiegelteils (22) senkrechten Richtung durch das Spiegelantriebsmittel durchzuführen,

wobei das Spiegelantriebsmittel umfasst:

- einen piezoelektrischen Aktuator (23, 24), um in Reaktion auf ein externes Regelungs-/Steuerungs-Signal verlagert zu werden,
- einen Verbinder (27), der mit dem Spiegelteil (22) und dem piezoelektrischen Aktuator (23, 24) verbunden ist, um eine Verlagerung des piezoelektrischen Aktuators (23, 24) an das Spiegelteil (22) zu übertragen, um das Spiegelteil (22) zu verlagern, und
- eine Regelungs-/Steuerungs-Einheit, um die Verlagerung des piezoelektrischen Aktuators (23, 24) zu regeln/steuern.

2. Miniaturspiegelvorrichtung nach Anspruch 1, wobei der piezoelektrische Aktuator (23, 24) umfasst:

- einen Abstandshalter (25), der zu einer Schicht an einem Umfang des Substrates gebildet ist,
- Träger (23), die von einer Oberfläche des Substrates mit Abstand angeordnet sind, und
- ein piezoelektrisches Material (24), das in oder an jedem der. Träger (23) gebildet ist.

3. Miniaturspiegelvorrichtung nach Anspruch 2, wobei die Träger (23) von dem Spiegelteil (22) mit Abstand und symmetrisch dazu angeordnet sind.

4. Miniaturspiegelvorrichtung nach einem der vorhergehenden Ansprüche, wobei das Spiegelteil (22) umfasst:

- einen Spiegel, um einfallendes Licht zu reflektieren, und
- eine Stütze (26), die unter dem Spiegel gebildet ist, um den Spiegel zu stützen.

5. Miniaturspiegelvorrichtung nach einem der vorhergehenden Ansprüche, wobei das Spiegelteil (22) von dem Substrat (21) mit Abstand angeordnet ist.

**6.** Miniaturspiegelvorrichtung nach einem der vorhergehenden Ansprüche, wobei das Substrat (21) an einer Position davon ein Durchgangsloch aufweist.

**7.** Miniaturspiegelvorrichtung nach Anspruch 6, wobei das Durchgangsloch in einer Bodenfläche des Spiegelteils (22) positioniert ist.

**8.** Optikaufnehmer, der eine Miniaturspiegelvorrichtung nach einem der Ansprüche 1 bis 7 verwendet, umfassend:

- ein Lichtquellenmodul (11), um Licht zu emittieren,
- ein Bündlungsteil (12), um das Licht von dem Lichtquellenmodul (11) auf eine Oberfläche eines optischen Aufnahmemediums (17) zu bündeln,
- einen optischen Detektor (19), um das von dem optischen Aufnahmemedium (17) reflektierte Licht in ein elektrisches Signal zu wandeln,
- einen optischen Teiler (13), der zwischen dem Lichtquellenmodul (11) und dem Bündelungsteil angeordnet ist, um das von dem Lichtquellenmodul emittierte Licht zu dem Bündelungsteil und an dem optischen Aufnahmemedium (17) reflektiertes und durch das Bündelungsteil passiertes Licht zu dem optischen Detektor (19) zu richten, und
- die Miniaturspiegelvorrichtung (20), die zwischen dem Bündelungsteil und dem optischen Teiler (13) angeordnet ist, um einfallendes Licht zu reflektieren und eine Feinanpassung eines Lichtwegs des reflektierten Lichts durchzuführen.

**9.** Optikaufnehmer nach Anspruch 8, wobei die Miniaturspiegelvorrichtung an einer 45°-Neigungsfläche eines Unter-Halters (15) angeordnet ist.

**10.** Optikdatenspeichervorrichtung, umfassend die Miniaturspiegelvorrichtung nach einem der Ansprüche 1 bis 7.

**11.** Optikdatenspeichervorrichtung, umfassend den Optikaufnehmer nach einem der Ansprüche 8 oder 9.

**Revendications**

**1.** Dispositif à micromiroir micro-usiné comprenant:

un organe d'entraînement de miroir sur un substrat (21) ; et
une partie de miroir (22) pour effectuer un mouvement parallèle dans une direction perpendiculaire à la surface de la partie de miroir (22) par l'organe d'entraînement de miroir;
où l'organe d'entraînement de miroir comporte:

un actionneur piézoélectrique (23, 24) destiné à être déplacé en réponse à un signal de commande externe;
un connecteur (27) relié à la partie de miroir (22) et à l'actionneur piézoélectrique (23, 24) pour transmettre un déplacement de l'actionneur piézoélectrique (23, 24) à la partie de miroir (22), pour déplacer la partie de miroir (22) ; et
un dispositif de commande pour commander le déplacement de l'actionneur piézoélectrique (23, 24).

**2.** Dispositif à micromiroir selon la revendication 1, dans lequel l'actionneur piézoélectrique (23, 24) comporte:

une pièce d'écartement (25) réalisé en une épaisseur sur une périphérie du substrat,
des organes en porte-à-faux (23) espacés d'une surface du substrat, et
un matériau piézoélectrique (24) formé dans ou sur chacun des porte-à-faux (23).

**3.** Dispositif à micromiroir selon la revendication 2, dans lequel les porte-à-faux (23) sont espacés de, et sont symétriques à la partie de miroir (22).

**4.** Dispositif à micromiroir selon l'une quelconque des revendications précédentes, dans lequel la partie de miroir (22) comporte:

un miroir pour réfléchir une lumière incidente, et
un support (26) formé sous le miroir pour supporter le miroir.

**5.** Dispositif à micromiroir selon l'une quelconque des revendications précédentes, dans lequel la partie de miroir (22) est espacée du substrat (21).

**6.** Dispositif à micromiroir selon l'une quelconque des revendications précédentes, dans lequel le substrat (21) possède un trou traversant dans une position de celui-ci.

**7.** Dispositif à micromiroir selon la revendication 6, dans lequel le trou traversant est positionné dans une surface inférieure de la partie de miroir (22).

**8.** Tête optique utilisant un dispositif à micromiroir tel que défini dans l'une quelconque des revendications 1 à 7, comprenant:

un module de source de lumière (11) pour émettre une lumière;

une partie convergente (12) pour faire converger la lumière du module de source de lumière (11) sur une surface d'un support d'enregistrement optique (17);

un détecteur optique (19) pour convertir la lumière réfléchie par le support d'enregistrement optique (17) en un signal électrique;

un séparateur optique (13) disposé entre le module de source de lumière (11) et la partie convergente pour diriger la lumière émise du module de source de lumière vers la partie convergente, et la lumière réfléchie au support d'enregistrement optique (17) et passant à travers la partie convergente au détecteur optique (19), et

un dispositif à micromiroir (20) disposé entre la partie convergente et le séparateur optique (13) pour réfléchir une lumière incidente et pour réaliser un ajustement fin d'un chemin de lumière de la lumière réfléchie.

9.  Tête optique selon la revendication 8, dans laquelle le dispositif à micromiroir est disposé sur une surface inclinée de 45° d'un sous-montage (15).

10. Dispositif optique de stockage de données comprenant le dispositif à micromiroir selon l'une quelconque des revendications 1 à 7.

11. Dispositif optique de stockage de données comprenant la tête optique selon l'une quelconque des revendications 8 ou 9.

# FIG.1

laser beam

# FIG.2

20

15

laser beam

# FIG.3

laser beam axis

$$d = \sqrt{2h}$$

## FIG.4A

22
27
I
I
23
24
21

## FIG.4B

24
24
27
22
I — I
24

# FIG.4C

# FIG.4D

# FIG.5A

# FIG.5B

$$V_1 = 0, \quad V_2 > 0$$

# FIG.6

**EP 1 043 716 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3935891
- US 5555539 A
- US 5532997 A
- US 5428588 A